Europäisches Patentamt

European Patent Office

Office européen des brevets

(19)

(11) Numéro de publication : **0 462 885 B1**

(12)

# FASCICULE DE BREVET EUROPEEN

(45) Date de publication du fascicule du brevet :
**09.03.94 Bulletin 94/10**

(51) Int. Cl.[5] : **A23L 1/236,** A23L 1/0562

(21) Numéro de dépôt : **91401627.4**

(22) Date de dépôt : **18.06.91**

(54) Composition d'aspartam.

(30) Priorité : **19.06.90 FR 9007674**

(43) Date de publication de la demande :
**27.12.91 Bulletin 91/52**

(45) Mention de la délivrance du brevet :
**09.03.94 Bulletin 94/10**

(84) Etats contractants désignés :
**AT BE CH DE DK ES GB GR IT LI LU NL SE**

(56) Documents cités :
**EP-A- 0 067 595**
**EP-A- 0 106 910**
**EP-A- 0 190 371**
**EP-A- 0 229 730**
**WO-A-89/00819**
**GB-A- 2 066 042**

(73) Titulaire : **ELF SANOFI**
**32-34, rue Marbeuf**
**F-75008 Paris (FR)**

(72) Inventeur : **Ridoux, Claude**
**Chemin des Busclats**
**F-84800 L'Isle Sur La Sorgue (FR)**

(74) Mandataire : **Gillard, Marie-Louise et al**
**Cabinet Beau de Loménie 158, rue de**
**l'Université**
**F-75340 Paris Cédex 07 (FR)**

EP 0 462 885 B1

## Description

La présente invention a pour objet une composition d'aspartam ; elle concerne plus précisément une nouvelle présentation d'aspartam .

L'aspartam , c'est-à-dire l'ester méthylique de la N-(L-α-aspartyl) L-phénylalanine, est un agent édulcorant acalorique couramment utilisé à l'époque actuelle, dans l'industrie pour "sucrer" les boissons, les bonbons, les desserts lactés ou, par les particuliers comme édulcorant de table. On trouve sur le marché ce produit sous forme de poudre, de petits granules ou de comprimés.

On sait que ce composé est sensible à l'action de l'humidité ou de la chaleur, et qu'il se décompose en formant de la dicétopipérazine, de telle sorte que la règlementation alimentaire actuelle impose que les présentations en fin de fabrication ou soumises aux essais de conservation standards, contiennent moins de 1,5 % de dicétopipérazine.

Plusieurs solutions ont été proposées pour stabiliser l'aspartam et notamment l'enrobage de la poudre du composé pur dans des films de divers polymères acceptables en alimentation, tels qu'amidon, celluloses, gélatine, polyesters, polyoléfines ou gommes, par dépôt de solutions atomisées de ces polymères sur la poudre divisée comme décrit dans le brevet US 4,384,004 (EP-A-0067595) ou dans des gangues obtenues par broyage d'une matrice résultant du refroidissement d'une suspension de la poudre dans un polymère fondu, tel qu'un polysaccharide, comme décrit dans le brevet US 3,928,633. On a aussi proposé dans la demande de brevet JP-A-57-150361 de préparer des granulés d'aspartam en le mélangeant à sec avec 99,7 à 50 parties en poids d'un excipient hydrosoluble avant d'effectuer une granulation avec un peu de liant ; les excipients cités sont le lactose, les dextrines, la gélatine, l'amidon, le saccharose et le sorbitol tandis que les liants sont l'eau, les alcools, les dextrines, la gélatine, les gommes et les saccharides.

La difficulté de la mise en solution dans les liquides est un autre problème rencontré dans l'utilisation de l'aspartam , qui n'a pas encore été totalement résolu ; certes, les formes proposées précédemment, qu'elles soient obtenues par granulation humide ou par compactage, du fait de leur granulométrie supérieure à celle de la forme poudre classique, sont plus faciles à manipuler industriellement puisqu'elles sont plus denses, elles libèrent moins de poussières et s'écoulent normalement, mais des inconvénients se manifestent encore au moment de l'emploi : leur mouillabilité et leur vitesse de dissolution dans les milieux aqueux ou lactés ne sont pas satisfaisantes.

La forme d'aspartam de la présente invention est facile à dissoudre, stable et d'une granulométrie convenant à une utilisation industrielle. Elle est constituée de particules enrobées avec une gélatine de très faible masse moléculaire, i.e. dont la masse moléculaire moyenne est comprise entre 3 000 et 15 000.

Un objet de l'invention consiste donc en une composition d'aspartam , constituée de particules d'aspartam comportant une couche superficielle de gélatine de très faible masse moléculaire.

La faible masse moléculaire de la gélatine superficielle est une caractéristique importante de l'invention ; en effet, l'utilisation de gélatines classiques ne permet pas d'obtenir une composition de grande mouillabilité et qui se dissout rapidement dans les liquides alimentaires ; seule la stabilité de la composition est améliorée.

Ces gélatines de très faible masse sont obtenues par une hydrolyse ménagée des gélatines courantes, sous l'action d'un acide ou d'une base en solution aqueuse ou d'une enzyme protéolytique telle que l'alcalase de Novo Industrie ; on trouve dans le commerce quelques qualités de ces gélatines dont les masses moléculaires moyennes sont comprises entre 3000 et 15000, alors que celles des gélatines classiques se situent au delà de 50000.

Les gélatines de l'invention, de très faible masse moléculaire, ont une force en gel pratiquement nulle dans les conditions habituelles de mesure, c'est-à-dire qu'elle n'est pas mesurable dans les conditions données par les "British standard" réf. BS 757 (1975), à savoir en solution aqueuse à la concentration de 6,67 % (p/v) et la température de 10°C ; une gélatine classique présente dans ces conditions une force en gel comprise entre 50 et 300 blooms. Par ailleurs, les gélatines de l'invention ont une viscosité en solution aqueuse à 20 % (p/v), mesurée à 25°C avec une pipette à écoulement du type de celle du Gelatin Manufacturers Institute of America, inférieure à 6,0 MPa.s alors que celle des gélatines classiques est supérieure à 500 mPa.s.

Les particules d'aspartam ont en général, avant la mise en oeuvre de l'enrobage selon l'invention, une dimension comprise entre 150 μm et 1 mm et les dimensions extrêmes des particules d'un même lot sont de préférence dans un rapport au plus égal à 3, avec une faible dispersion, afin d'assurer un enrobage régulier.

Actuellement, les poudres d'aspartam commercialisées par les fabricants de ce produit chimique sont des amas de fines aiguilles de granulométrie trop faible, et très dispersée selon les qualités, comprises en moyenne entre 40 et 100 μm, 80 et 150 μm, ou même 40 et 200 μm ; ainsi, selon un autre aspect de l'invention, les particules d'aspartam qui sont enrobées avec la gélatine de très faible masse moléculaire, peuvent résulter du tamisage des poudres commerciales, ou ne pas être constituées de poudre d'aspartam pur mais de grains, résultant de la granulation des poudres commerciales avec un liant.

2

Ces grains peuvent être préparés par toutes les techniques de granulation des poudres, classiques dans le domaine pharmaceutique où elles sont en général utilisées dans la première étape de la fabrication des comprimés, comme il est décrit par exemple dans Handbook of powder technology - vol 1 - C.E. Capes ou dans Remington's Pharmaceutical Sciences - 17 Edn -.

Le spécialiste a, à sa disposition, un certain nombre d'appareils industriels qui lui permettent d'effectuer une telle granulation des poudres commerciales d'aspartam , soit par voie sèche, sous une certaine pression, soit par voie humide, à l'eau ou avec un solvant hydroalcoolique.

On préfère granuler en présence d'un liant, notamment pour améliorer la résistance mécanique des particules ; on peut utiliser des liants alimentaires classiques : amidon, cellulose et dérivés, alginate, polyvinylpyrrolidone ou gélatine ; la quantité de liant mise en oeuvre dépend de sa nature mais elle sera, comme il est classique pour un tel agent, inférieure à 10 % du poids de l'aspartam . On préfère tout particulièrement utiliser une gélatine en tant que liant, notamment pour avoir une composition chimiquement homogène, c'est à dire qui ne comporte que de l'aspartam et de la gélatine. Toutes les qualités de gélatines alimentaires peuvent être utilisées, que ce soient les gélatines classiques, ou celles de faible masse moléculaire, obtenues par hydrolyse et dont la force en gelée est faible ou nulle.

Les particules selon l'invention préparées à partir de grains liés avec des gélatines de masse moléculaire supérieure à 50000 sont mécaniquement plus résistantes. La granulation est éventuellement suivie d'une opération de calibrage pour éliminer les grains de taille extrême qui auraient pu se former.

L'enrobage des particules, constituées d'aspartam pur ou de grains comportant un agent liant, et notamment de 2 à 5 % de gélatine classique, peut être effectué par toute méthode permettant le dépôt d'une couche fine de gélatine de très faible masse, sur chacun des grains, de telle sorte que les particules selon l'invention aient des dimensions comprises entre 150 µm et 1 mm, avec de préférence, dans un même lot, des dimensions extrêmes dans un rapport au plus égal à 3 ; il est important d'éviter qu'un collage des grains entre eux n'intervienne, ce qui diminuerait la vitesse de dissolution avantageuse de la composition.

En général, la gélatine sera déposée sous forme d'une solution aqueuse ou hydroalcoolique de concentration comprise entre 3 % et 25 % (p/v) avec élimination simultanée du solvant ; de façon classique, on pourra effectuer soit l'atomisation d'une suspension des grains dans la solution de gélatine, soit la pulvérisation d'une solution de gélatine sur les grains en lit d'air fluidisé, ou encore un traitement des grains dans une turbine d'enrobage ; ces procédés classiques sont décrits notamment dans Remington's Pharmaceutical Sciences - 17th Edn - 91 p. 1633 ou dans Theory and Pratice of industrial pharmacy 3rd Edn 12.

La gélatine de très faible masse moléculaire étant peu visqueuse, la solution pourra être déposée à température ambiante, ce qui est avantageux étant donné la forte tendance de l'aspartam à une décomposition sous l'action conjuguée de la chaleur et de l'humidité.

Le poids de la gélatine d'enrobage représentera en général de 1 à 5 % du poids des particules selon l'invention. Selon les conditions d'enrobage la couche superficielle de gélatine de très faible masse sera plus ou moins hydratée. Les particules terminées auront un taux d'humidité inférieur à 10 % et de préférence inférieur à 6 %. Dans ces conditions, on a constaté que les particules conservées à température ambiante, entre 18°C et 30°C, durant 6 mois dans des sacs de polyéthylène fermés par un simple lien et ouverts chaque mois pour effectuer un prélèvement d'échantillons, étaient plus stables qu'une poudre commerciale d'aspartam pur, conservée dans les mêmes conditions, la quantité de dicétopipérazine formée étant moitié moindre.

Dans ce qui suit, on décrit des exemples de réalisation de l'invention.

EXEMPLE 1

On granule une poudre d'aspartam pure, de granulométrie comprise entre 40 et 100 µm par compactage dans une presse à compacter de type Alexanderwerk en présence de 2 à 3 % environ en poids d'eau.

Les grains obtenus, sensiblement sphériques, ont un diamètre compris entre 300 µm et 1 mm. On pulvérise sur les grains, en lit d'air fluidisé, une solution hydroalcoolique de gélatine de très faible masse moléculaire de concentration 5 % (p/v) à raison de 2 % en poids de gélatine par rapport aux poids des grains.

La solution de dépôt est un mélange 50/50 (V/V) d'eau et d'éthanol. La gélatine commercialisée par Sanofi Bio-Industries sous la référence SPG est une gélatine de viscosité 4,5 mPa.s pour une concentration de 20 % (p/V) à une température de 25°C.

Les particules enrobées sont ensuite séchées dans un lit d'air fluidisé sous un fort courant d'air à température ambiante.

Les propriétés physiques de la poudre de départ, des grains résultant de sa granulation, des particules selon l'invention et de particules obtenues par le même procédé, mais avec une gélatine classique de viscosité 750 mPa.s et de force en gel 100 blooms, sont indiquées dans le tableau 1.

| Propriété Physique | poudre de départ | poudre granulée | particules enrobées de l'invention | particules enrobées (comparaison) |
|---|---|---|---|---|
| granulométrie | 40 à 100 $\mu$m | 300 $\mu$m à 1 mm | 300 $\mu$m à 1 mm | 300 $\mu$m à 1mm |
| densité apparente | 0,41 g/cm$^3$ | 0,56 | 0,59 | 0,58 |
| humidité | 3,99 % | 3,90 % | 4,20 % | 4,60 % |
| coulabilité | nulle | fluide | fluide | fluide |
| dispersibilité eau (20°C - 1g/100 ml) | mauvaise (grumeaux) | très bonne | très bonne | très bonne |
| mouillabilité (20°C - 1g/100 ml) | mauvaise | lente | rapide | lente |
| dissolution aqueuse (20°C - 1g/100 ml) | en 15 min | en 20 min | en 3 mn | en 45 mn |

Lorsque l'on soumet un lait gélifié aromatisé de pH 6,8, comportant 0,10 % (p/p) d'aspartam en poudre ou de particules enrobées selon l'invention, à une température de 85°C pendant 5 minutes, on constate une perte de pouvoir sucrant nettement inférieure avec l'édulcorant de l'invention.

EXEMPLE 2

Une poudre d'aspartam , de granulométrie comprise entre 40 $\mu$m et 100 $\mu$m est mouillée avec 22 % (p/p) d'eau dans un mélangeur à batteur planétaire ou à socs de charrue et le mélange calibré dans un granulateur oscillant, comportant une grille de maille 630 $\mu$m. Les grains obtenus de diamètre compris entre 150 $\mu$m et 300 $\mu$m sont séchés à 25°C sous vide ou en lit d'air fluidisé.

Les grains sont ensuite enrobés comme à l'exemple 1, pour donner des particules dont la pellicule en gélatine représente 2 % en poids du poids total. Ces particules selon l'invention sont de dimensions plus faibles et moins dispersées, qu'à l'exemple 1.

EXEMPLE 3

On granule une poudre d'aspartam de granulométrie comprise entre 40 et 100 $\mu$m selon la technique décrite dans l'exemple 2, mais avec une solution aqueuse de gélatine de type A, c'est à dire préparée par hydrolyse acide du collagène, de force en gelée 100 blooms à 10°C ; la solution de concentration 100 g/l est introduite peu à peu sur la poudre d'aspartam dans le granulateur ; les grains finalement obtenus, de granulométrie comprise entre 150 $\mu$m et 300 $\mu$m, contiennent 1 % en poids de gélatine par rapport au poids d'aspartam .

Ils sont ensuite, enrobés en lit d'air fluidisé, dans les mêmes conditions qu'à l'exemple 2.

Les particules obtenues ont une résistance mécanique supérieure à celles de l'exemple 2 ; il se forme, en effet, moins de poussières avec le produit du présent exemple, lors d'un essai d'attrition qui consiste à retourner régulièrement pendant 10 minutes, un récipient en verre comportant un croisillon métallique et le produit à étudier.

EXEMPLE 4

On applique le procédé décrit à l'exemple 1 à une gélatine de viscosité 2,5 mPa.s, à la concentration de 20 % à 25°C, telle que la gélatine dénommée crotéine A, commercialisée par la société CRODA. Les caractéristiques physiques de la composition d'aspartam ainsi obtenue sont identiques à celles de la composition de l'exemple 1.

EP 0 462 885 B1

## Revendications

1. Composition particulaire d'aspartam caractérisée en ce qu'elle est constituée de particules d'aspartam enrobées avec une gélatine de masse moléculaire moyenne comprise entre 3 000 et 15 000.

2. Composition selon la revendication 1, caractérisée en ce que la gélatine a une viscosité à 25°C en solution aqueuse à 20 % (p/v) inférieure à 6 mPa.s et n'a pas de force en gel mesurable à 10°C en solution aqueuse à 6,67 % (p/v).

3. Composition selon l'une des revendications 1 ou 2, caractérisée en ce que le poids de l'enrobage représente de 1 à 5 % du poids de l'aspartam de départ.

4. Composition selon l'une quelconque des revendications précédentes, caractérisée en ce que les particules enrobées ont un diamètre compris entre 150 μm et 1 mm, et que le rapport des diamètres extrêmes est au plus égal à 3.

5. Composition selon l'une quelconque des revendications précédentes, caractérisée en ce que les particules résultent de la granulation d'une poudre d'aspartam pur avec moins de 10 % en poids d'un agent liant.

6. Composition selon la revendication 5, caractérisée en ce que le liant est une gélatine.


## Patentansprüche

1. Teilchenförmige Aspartamzusammensetzung, dadurch gekennzeichnet, daß sie aus Aspartamteilchen besteht, die mit Gelatine mit einer mittleren Molmasse zwischen 3000 und 15 000 überzogen sind.

2. Zusammensetzung nach Anspruch 1, dadurch gekennzeichnet, daß die Gelatine eine Viskosität bei 25°C in einer 20 %igen (M/V) wässerigen Lösung von weniger als 6 mPa.s hat und bei 10°C in einer 6,67 %igen (M/V) wässerigen Lösung keine meßbare Gelierungskraft aufweist.

3. Zusammensetzung nach einem der Ansprüche 1 oder 2, dadurch gekennzeichnet, daß die Masse des Überzugs 1 bis 5 % der Masse des Ausgangs-Aspartams beträgt.

4. Zusammensetzung nach einem der vorhergehenden Ansprüche, dadurch gekennzeichnet, daß die überzogenen Teilchen einen Durchmesser zwischen 150 μm und 1 mm aufweisen und das Verhältnis der größten Durchmesser höchstens 3 beträgt.

5. Zusammensetzung nach einem der vorhergehenden Ansprüche, dadurch gekennzeichnet, daß die Teilchen durch Granulierung eines reinen Aspartampulvers mit weniger als 10 % Masse eines Bindemittels erhalten werden.

6. Zusammensetzung nach Anspruch 5, dadurch gekennzeichnet, daß das Bindemittel Gelatine ist.


## Claims

1. Aspartame particulate composition, characterized in that it is constituted of particles of aspartame coated with a gelatin of average molecular weight ranging between 3 000 and 15 000.

2. Composition according to claim 1, characterized in that the gelatin has a viscosity at 25°C in a 20% (w/v) aqueous solution which is less than 6 mPa.s and has no measurable gelling power at 10°C in a 6.67% (w/v) aqueous solution.

3. Composition according to one of claims 1 or 2, characterized in that the weight of the coating represents between 1 and 5% of the weight of the starting aspartame.

4. Composition according to any one of the preceding claims, characterized in that the coated particles have a diameter ranging between 150 μm and 1 mm, and in that the ratio of the extreme diameters is at the most equal to 3.

5

5. Composition according to any one of the preceding claims, characterized in that the particles result from the granulating of a powder of pure aspartame with less than 10% by weight of a binding agent.

6. Composition according to claim 5, characterized in that the binder is a gelatin.